**Europäisches Patentamt**

**European Patent Office**

**Office européen des brevets**

(11) Veröffentlichungsnummer: **0 232 242 B1**

(12) **EUROPÄISCHE PATENTSCHRIFT**

(45) Veröffentlichungstag der Patentschrift:
**19.09.90**

(21) Anmeldenummer: **87890005.9**

(22) Anmeldetag: **14.01.87**

(51) Int. Cl.⁵: **B60C 11/01**, B60C 9/18

(54) **Fahrzeugluftreifen.**

(30) Priorität: **05.02.86 AT 280/86**

(43) Veröffentlichungstag der Anmeldung:
**12.08.87 Patentblatt 87/33**

(45) Bekanntmachung des Hinweises auf die Patenterteilung:
**19.09.90 Patentblatt 90/38**

(84) Benannte Vertragsstaaten:
**AT DE FR GB IT**

(56) Entgegenhaltungen:
**EP-A- 0 122 530**
**DE-A- 2 722 359**
**DE-A- 3 431 655**
**FR-A- 2 280 519**
**FR-A- 2 303 675**
**FR-A- 2 396 662**

(73) Patentinhaber: **Semperit Reifen Aktiengesellschaft,**
**Wienersdorferstrasse 20-24, A-2514 Traiskirchen(AT)**

(72) Erfinder: **Stelzer, Josef, Franz-Kocl-Strasse 6/18,**
**A-100 Wien(AT)**

(74) Vertreter: **Vinazzer, Edith, Semperit Reifen**
**Aktiengesellschaft Patentabteilung**
**Wienersdorferstrasse 20-24, A-2514 Traiskirchen(AT)**

## Beschreibung

Die Erfindung bezieht sich auf einen Fahrzeugluftreifen mit einer ein- oder mehrlagigen Karkasse, mit einem Lauffächenteil und mit einem unterhalb desselben angeordneten, vorzugsweise mehrlagigen, Gürtel, welcher in die Schulterbereiche des Reifens ragt, gemäß dem Obergegriff des Anspruchs 1. Derartige Reifen sind z.B. durch die DE-A 3431 655 bekannt.

Bei Fahrzeugluftreifen ergibt sich im Betrieb durch die Walkarbeit eine nicht unbeträchtliche Erhöhung der Temperatur der Reifen. Diese Temperaturerhöhung hat eine Verminderung der Lebensdauer der Reifen zur Folge. Es kommt bei erhöhter Lauftemperatur zu einem verstärktem Abrieb der Lauffläche, es ergibt sich weiter hin bei Gürtelreifen durch Erhitzung der Gürtelbauteile auch eine Verminderung der Strukturfestigkeit. Es sind dabei insbesondere die Randbereiche des Gürtels gefährdet, weil hier nicht nur der ohnehin problematische Überlappungsbereich Seitenwand/Lauffläche, sondern auch im Fahrbetrieb eine hohe mechanische Belastung vorliegt, die eine entsprechend hohe Wärmeentwicklung zur Folge hat, und diese Wärme kann gerade an dieser Stelle nicht ohne weiteres abgeführt werden. Lösungsansätze sind zwar bekannt, jedoch bei gattungsfremden Reifen ohne Schulterrippen (FR-A 2303 675).

Es ist die Aufgabe der vorliegenden Erfindung, einen Fahrzeugluftreifen eingangs erwähnter Art zu schaffen, bei dem eine wirkungsvolle Abfuhr der beim Lauf des Reifens entstehenden Wärme, und zwar insbesondere der an den Randbereichen des Gürtels entstehenden oder in diese Randbereiche fließenden Wärme, erfolgt.

Der Fahrzeugluftreifen eingangs erwähnter Art ist erfindungsgemäß dadurch gekennzeichnet, daß die Seitenränder des Gürtels bis an den Nutengrund reichen.

Durch die erfindungsgemäße Ausbildung kann der vorstehend angeführten Zielsetzung sehr gut entsprochen werden, da eine wirksame Kühlung im Schulterbereich des Reifens, wo die Ränder des Gürtels liegen, erzielt wird. Diese Kühlwirkung basiert auf einer erheblichen Intensivierung der Luftumströmung in den Randbereichen des Gürtels bzw. der Schulterbereiche des Reifens. Es erfolgt in den Nuten, welche zwischen den in den Schulterbereichen vorgesehenen Rippen liegen, durch die Drehbewegung des Reifens eine intensive, zum Lauffächenteil des Reifens hin gerichtete Luftströmung, welche einerseits die von Elastomermaterial umschlossenen Seitenränder des Gürtels unmittelbar kühlt und andererseits, weil sie die Rippen an mehreren Seiten bestreicht, auch über diese Rippen eine weitere Wärmeableitung aus dem Randbereich des Gürtels herbeiführt. Darüber hinaus wird bei einem üblicherweise aus Stahlkord aufgebauten Gürtel durch die gute Wärmeleitfähigkeits des Metalls auch Wärme aus dem Mittenbereich der Reifenlauffläche zum Rand des Gürtels hin abgeführt, wo, wie erwähnt, eine sehr wirksame Kühlung erfolgt. Dadurch wir die Erhitzung des Reifens im Lauf stark reduziert.

Es kann weiters durch die erfindungsgemäße Ausbildung eines Fahrzeugluftreifens zusätzlich eine deutliche Verminderung des Laufflächengeräusches erzielt werden. Dies erscheint dadurch erklärbar, daß die in den Nuten auftretende Luftströmung bei ihrem Austritt aus den Nuten im Bereich der Lauffläche besonders in dem gerade auf der Fahrbahn abrollenden Bereich des Reifens eine Luftwirbelung herbeiführt, welche der Ausbreitung des Abrollgeräusches entgegenwirkt.

Bei einer besonders günstigen Ausgestaltung der Erfindung ist vorgesehen, daß die Rippen in den oberen Seitenwandbereich hinein verlaufen. Diese Maßnahme bedingt eine Intensivierung der Luftströmung und eine weitere Verbesserung der Wärmeabfuhr.

Eine vorteilhafte Ausführungsform des erfindungsgemäßen Fahrzeugluftreifens besteht darin, daß die Rippen radial bzw. annähernd radial verlaufen. Bei dieser Ausführungsform ergibt sich der Vorteil, daß bei der Montage des Reifens auf die Felge die Drehrichtung, die der betreffende Reifen, bedingt durch seine Montage, im Betrieb des Fahrzeuges vorwiegend ausführt, nicht berücksichtigt werden muß, da durch den annähernd radialen Verlauf der Rippen bzw. der zwischen benachbarten Rippen vorliegenden Nuten die in diesen Nuten entstehende Luftströmung von der Drehrichtung des Reifens unabhängig ist.

Eine andere Ausführungsform ist dadurch gekennzeichnet, daß die Rippen in ihrer Radialerstreckung zur Umfangsrichtung hin gekrümmt verlaufen. Bei dieser Ausführungsform empfiehlt sich zwar eine Beachtung der im Betrieb vorwiegend auftretenden Drehrichtung des am Fahrzeug montierten Reifens, was eine zusätzliche Sorgfalt bei der Montage der Reifen auf den Felgen und bei der Montage der Räder am Fahrzeug verlangt, aber es wird durch diese Ausbildung des Reifens eine Verbesserung der Wärmeabfuhr durch die die Nuten durchfließende Luftströmung erzielt. Man kann dabei eine weitere Verbesserung bzw. Intensivierung der Luftströmung erhalten, wenn man vorsieht, daß die Rippen zusätzlich auch in ihrer Axialerstreckung zur Umfangsrichtung hin gekrümmt verlaufen. Bei dieser Ausführungsform sind die Rippen in Art von Gebläseschaufeln zweiseitig gekrümmt, wodurch sich eine weitere Intensivierung der die Nuten durchfließenden Luftströmung erzielen läßt.

Zur weiteren Intensivierung der Wärmeabfuhr von den Randbereichen des Gürtels kann man vorteilhaft vorsehen, daß der Nutengrund eine den Rand des Gürtels untergreifende Ausnehmung aufweist. Es ist zur Intensivierung der Wärmeabfuhr aus dem Randbereich der gürtelartigen Verstärkung auch günstig, wenn der Nutengrund am Rand des Gürtels eine Stufe bildet. Eine weitere positive Beeinflussung der Wärmeabfuhr aus dem Randbereich der gürtelartigen Verstärkung kann dadurch erzielt werden, daß im Schulterbereich oberhalb des Randes des Gürtels eine Nut vorgesehen ist.

Um eine ausreichende Wärmeabfuhr zu gewährleisten, ist nach einem weiteren Merkmal der Erfindung vorgesehen, daß die Länge der Rippen in radialer Richtung betrachtet, das 0,1 bis 0,5-fache der Laufflächenbreite beträgt.

Als die Wärmeabfuhr ebenfalls begünstigende Maßnahme ist bei einer weiteren Ausgestaltung der Erfindung vorgesehen, daß der Gürtel seitlich über die Ränder des Laufflächenteiles hinaus in die Schulterbereiche des Reifens ragt.

Es kann erwähnt werden, daß verschiedene Fahrzeugluftreifen bekannt sind, welche einen Gürtel aufweisen, der breiter als die Lauffläche des Reifens ausgebildet ist. Diese Maßnahme soll bei den bekannten Reifenkonstruktionen dazu dienen, einen möglichst steifen Aufbau der Laufflächenzone zu erreichen, um damit einen möglichst geringen Rollwiderstand des Reifens zu erzielen oder dazu dienen, die Randzonen des Gürtels möglichst weit außerhalb der Ränder des Laufflächenteiles anzuordnen, um damit die mechanischen Belastungen, welche am Übergang vom Laufflächenteil zu den Seitenwänden des Reifens besonders stark sind, möglichst von den Randzonen des Gürtels fernzuhalten, da beim Auftreten großer mechanischer Belastungen an den Rändern des Gürtels an diesen Stellen die Struktur des Reifens leiden kann.

Die Erfindung wird nun unter Bezugnahme auf die Zeichnung, in der einige Ausführungsformen des erfindungsgemäß ausgebildeten Fahrzeugluftreifens schematisch dargestellt sind, weiter erläutert. In der Zeichnung zeigt: Fig. 1 eine erste Ausführungsform eines erfindungsgemäß ausgebildeten Fahrzeugluftreifens im Schnitt, Fig. 2 eine andere Ausführungsform, gleichfalls im Schnitt, Fig. 3 eine weitere Ausführungsform eines erfindungsgemäß ausgebildeten Reifens in teilweise aufgeschnittener schaubildlicher Darstellung und Fig. 4 eine weitere Ausführungsform , hier in einer teilweisen Draufsicht auf den Schulterbereich bzw. den oberen Seitenwandbereich.

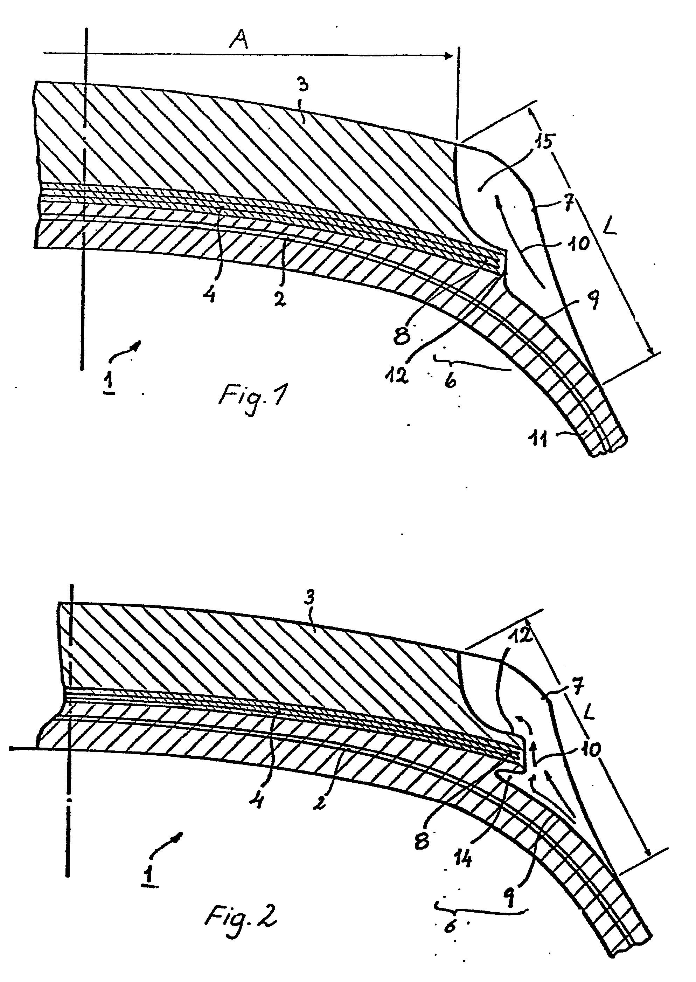

Der in Fig. 1 ausschnittsweise im Schnitt dargestellte Fahrzeugluftreifen 1 ist mit einer ein- oder mehrlagigen Karkasse 2 mit einem Laufflächenteil 3 und mit einem unterhalb des Laufflächenteiles 3 angeordneten, hier mehrlagigen Gürtel 4 versehen, welcher seitlich in die Schulterbereiche 6 des Reifens 1 ragt. Der Reifen 1 weist in seinen Schulterbereichen 6 Rippen 7 auf, welche von den Seitenwänden 11 des Reifens 1 ausgehen und zum Laufflächenteil 3 weisen. Diese Rippen 7 sind somit zumindest in den beiden Schulterbereichen 6 des Reifens 1 vorgesehen und ähnlich wie die Zähne eines Zahnrades über den ganzen Umfang des Reifens 1 verteilt angeordnet. Zwischen den Rippen 7 sind Nuten 15 ausgebildet, und es reichen die von Elastomermaterial umschlossenen Seitenränder 8 des Gürtels 4 bis an den Nutengrund 9 dieser Nuten 15. Die in den Schulterbereichen 6 des Reifens 1 vorgesehenen Rippen 7 verlaufen in diesem Fall radial bzw. annähernd radial; Gleiches gilt für die zwischen den Rippen 7 befindlichen Nuten 15.

Die Länge L der Rippen 7 beträgt, in radialer Richtung betrachtet, das 0,1 bis 0,5-fache der mit A bezeichneten Laufflächenbreite. Hiebei ist es möglich, daß die Rippen 7 nur im Schulterbereich 6 des Reifens 1 vorgesehen sind oder auch in den oberen Seitenwandbereichen bzw. den Laufflächenteil 3 hinein verlaufen.

Durch die im betriebsmäßigen Lauf auftretende Rotation des Reifens 1 entsteht in den Nuten 15 eine radiale Luftströmung, welche durch den Pfeil 10 versinnbildlicht ist. Diese Luftströmung führt Wärme vom Nutengrund 9 ab, wodurch die Seitenränder 8 des Gürtels 4 unmittelbar gekühlt werden und nimmt weiter Wärme von den Seitenflächen der Rippen 7 auf, wodurch eine weitere Wärmeabfuhr aus den Schulterbereichen 6 des Reifens 1 stattfindet und die Seitenränder 8 des Gürtels 4 eine weitere Abkühlung erfahren. Durch diese Abkühlung der Schulterbereiche 6 des Reifens 1 bzw. der Seitenränder 8 des Gürtels 4 wird durch die im allgemeinen gute Wärmeleitfähigkeit des Gürtels 4 auch Wärme aus den mittig gelegenen Zonen des Reifens 1 abgeführt. Die direkte Wärmeleitung von den Seitenrändern 8 des Gürtels 4 an die den Nutengrund 9 entlang verlaufende Luftströmung 10 wird durch die Stufe 12, die der Nutengrund 9 im Bereich des Randes 8 des Gürtels 4 bildet, deutlich verstärkt.

Bei der in Fig. 2 dargestellten Ausführungsform, welche der in Fig. 1 dargestellten Ausführungsform eines Fahrzeugluftreifens ähnlich ist, weist der Nutengrund 9 eine den Rand 8 des Gürtels 4 untergreifende Ausnehmung 14 auf, welche eine intensive Verwirbelung der Luftströmung 10 beim Passieren des Randes 8 des Gürtels 4 hervorruft, und es entsteht dadurch im Verein mit der Stufe 12 des Nutengrundes 9 eine besonders gute Wärmeabfuhr vom Rand 8 des Gürtels 4.

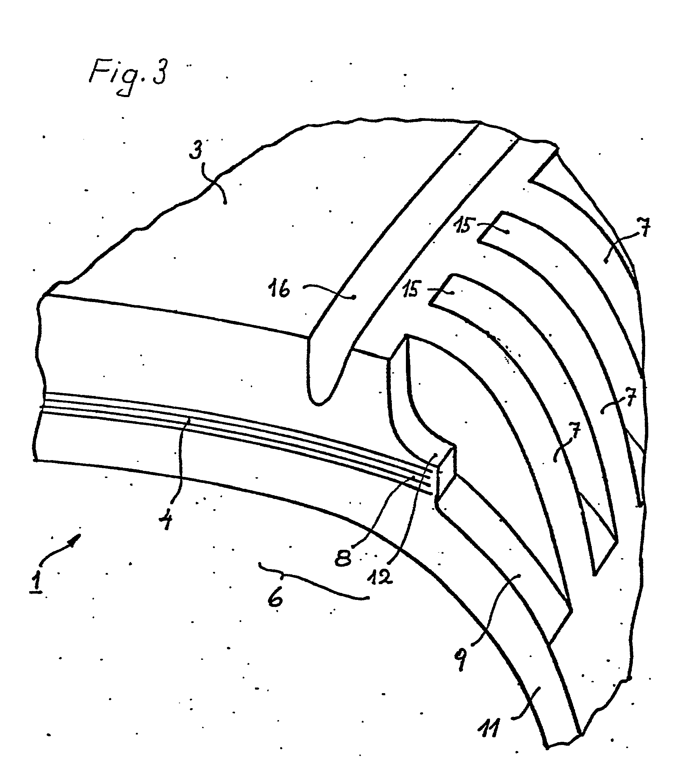

Bei der in Fig. 3 dargestellten Ausführungsform eines Fahrzeugluftreifens 1 ist der Nutengrund 9 der zwischen den Rippen gelegenen Nuten 15 wieder mit einer Stufe 12 am Rand 8 des Gürtels 4 ausgebildet. Es ist weiter im Schulterbereich 6 des Reifens 1 oberhalb des Randes 8 des Gürtels 4 eine in Umfangsrichtung umlaufende Nut 16 vorgesehen.

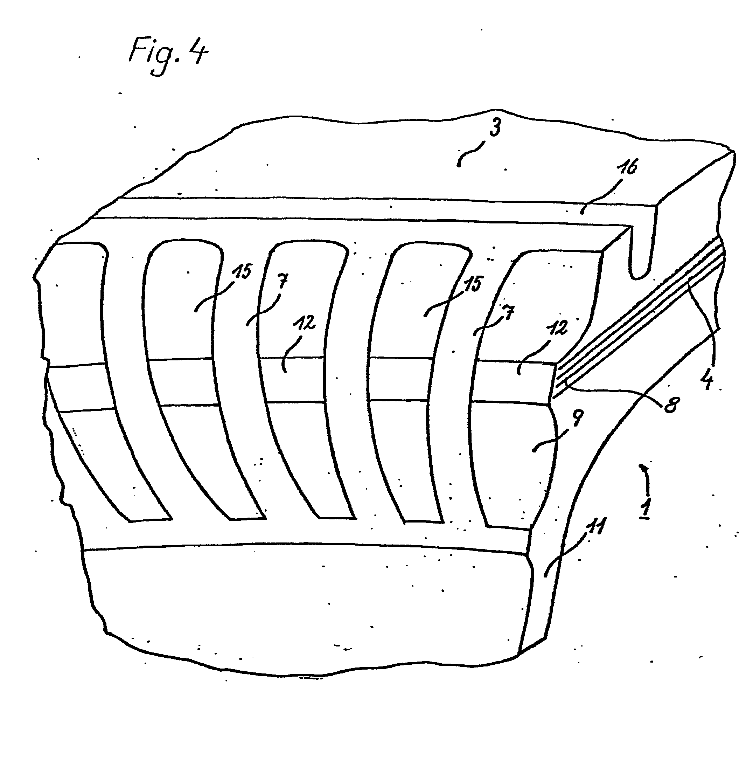

Bei der in Fig. 4 in Seitenansicht dargestellten Ausführungsform eines Fahrzeugluftreifens sind die in den Schulterbereichen 6 des Reifens 1 vorgesehenen Rippen 7 in ihrer Radialerstreckung zur Umfangsrichtung hin gekrümmt. Es kann dadurch eine Intensivierung der Luftströmung in den Nuten 15 zwischen den Rippen 7 und vor allem ein weitgehend unbehinderter Abfluß der Luftströmung an den Enden der Rippen 7 erzielt werden.

Eine noch weitgehende Verbesserung der Durchströmung der zwischen den Rippen gelegenen Nuten kann erzielt werden, wenn man nach einer weiteren gesondert nicht dargestellten Ausführungsform die Rippen in Art von Gebläseschaufeln sowohl in ihrer Radial- als auch in ihrer Axialerstreckung zur Umfangsrichtung hin gekrümmt ausbildet. Der in der Axialerstreckung der Rippen zur Umfangsrichtung hin gekrümmte Verlauf ergibt einen halboffenen Abschluß der zwischen den Rippen gelegenen Nuten, welcher Abschluß die Geräuschentwicklung des Reifens verbessert und die Wärmeabfuhr aus dem Schulterbereich des Reifens intensiviert.

Es ist auch möglich, die Rippen so auszuführen, daß sich ihre Breite, über ihre Länge betrachtet, insbesondere kontinuierlich, verändert.

**Patentansprüche**

1. Fahrzeugluftreifen (1) mit einer ein- oder mehrlagigen Karkasse (2), mit einem Laufflächenteil (3) und mit einem unterhalb desselben angeordneten, vorzugsweise mehrlagigen von Elastomermaterial allseits umschlossenen Gürtel (4), welcher in die Schulterbereiche (6) des Reifens ragt, welcher Reifen (1) zumindest in den Schulterbereichen (6) verlaufende, von den Seitenwänden (11) des Reifens ausgehende, zum Laufflächenteil (3) hin weisende, im wesentlichen quer zur Umfungseinrichtung verlaufende Rippen (7) aufweist, zwischen denen Nuten (15) gebildet sind, dadurch gekennzeichnet, dass die Seitenränder (8) des Gürtels (4) bis an den Nutengrund (9) reichen.

2. Fahrzeugluftreifen nach Anspruch 1, dadurch gekennzeichnet, daß die Rippen (7) in den oberen Seitenwandbereich hinein verlaufen.

3. Fahrzeugluftreifen nach Anspruch 1 oder 2, dadurch gekennzeichnet, daß die Rippen (7) radial bzw. annähernd radial verlaufen.

4. Fahrzeugluftreifen nach Anspruch 1 oder 2, dadurch gekennzeichnet, daß die Rippen (7) in ihrer Radialerstreckung zur Umfangsrichtung hin gekrümmt verlaufen.

5. Fahrzeugluftreifen nach Anspruch 4, dadurch gekennzeichnet, daß die Rippen (7) zusätzlich auch in ihrer Axialerstreckung zur Umfangsrichtung hin gekrümmt verlaufen.

6. Fahrzeugluftreifen nach einem der Ansprüche 1 bis 5, dadurch gekennzeichnet, daß der Nutengrund (9) eine den Rand des Gürtels (4) untergreifende Ausnehmung (14) aufweist.

7. Fahrzeugluftreifen nach einem der Ansprüche 1 bis 6, dadurch gekennzeichnet, daß der Nutengrund (9) am Rand des Gürtels (4) eine Stufe (12) bildet.

8. Fahrzeugluftreifen nach einem der Ansprüche 1 bis 7, dadurch gekennzeichnet, daß im Schulterbereich (6) oberhalb des Randes (8) des Gürtels (4) eine Laufflächen-Nut (16) vorgesehen ist.

9. Fahrzeugluftreifen nach einem der Ansprüche 1 bis 8, dadurch gekennzeichnet, daß die Länge (L) der Rippen (7), in radialer Richtung betrachtet, das 0,1 bis 0,5-fache der Laufflächenbreite (A) beträgt.

10. Fahrzeugluftreifen nach einem der Ansprüche 1 bis 9, dadurch gekennzeichnet, daß der Gürtel (4) seitlich über die Ränder des Laufflächenteiles (3) hinaus in die Schulterbereiche (6) des Reifens ragt.

**Claims**

1. A pneumatic vehicle tyre (1) comprising a single-layer or multi-layer carcass (2), having a tread component (3) and a preferably multi-layer belt (4) which is enclosed all round by elastomeric material, projects into the shoulder zones (6) of the tyre, and is arranged beneath the tread component (3), which tyre comprises ribs (7) which extend fundamentally transversely to the peripheral direction, extend at least in the shoulder zones (6), commence from the side walls (11) of the tyre and face towards the tread component (3) and between which grooves (15) are formed, characterised in that the side walls (8) of the belt (4) extend to the base (9) of the grooves.

2. A pneumatic vehicle tyre as claimed in Claim 1, characterised in that the ribs (7) extend into the upper side wall zone.

3. A pneumatic vehicle tyre as claimed in Claim 1 or 2, characterised in that the ribs (7) extend radially or approximately radially.

4. A pneumatic vehicle tyre as claimed in Claim 1 or 2, characterised in that the ribs (7) are curved towards the periphery in their radial direction.

5. A pneumatic vehicle tyre as claimed in Claim 4, characterised in that the ribs (7) are additionally curved towards the periphery in their axial direction.

6. A pneumatic vehicle tyre as claimed in one of Claims 1 to 5, characterised in that the base (9) of the grooves comprises a recess (14) which engages under the edge of the belt (4).

7. A pneumatic vehicle tyre as claimed in one of Claims 1 to 6, characterised in that the base (9) of the grooves forms a step (12) at the edge of the belt (4).

8. A pneumatic vehicle tyre as claimed in one of Claims 1 to 7, characterised in that a tread groove (16) is arranged in the shoulder zone (6) above the edge (8) of the belt (4).

9. A pneumatic vehicle tyre as claimed in one of Claims 1 to 8, characterised in that considered in the radial direction the length (L) of the ribs (7) amounts to 0.1 to 0.5 times the tread breadth (A).

10. A pneumatic vehicle tyre as claimed in one of Claims 1 to 9, characterised in that the belt (4) projects laterally beyond the edges of the tread component (3) into the shoulder zones (6) of the tyre.

**Revendications**

1. Bandage pneumatique (1) pour véhicules, comprenant une carcasse (2) à une ou plusieurs couches, une partie (3) formant surface de roulement, ainsi qu'une ceinture (4) de préférence en plusieurs couches, qui est placée au-dessous de ladite partie, est entourée de toutes parts par un matériau élastomère et déborde dans les zones des épaulements (6) du bandage, ce bandage (1) comportant des nervures (7) qui s'étendent au moins dans les zones des épaulements (6), partent des flancs (11) dudit bandage, sont orientées vers la partie (3) formant surface de roulement, s'étendent pour l'essentiel transversalement par rapport au sens périphérique, et entre lesquelles sont formées des rainures (15), caractérisé par le fait que les bords latéraux (8) de la ceinture (4) s'étendent jusqu'au fond (9) des rainures.

2. Bandage pneumatique pour véhicules selon la revendication 1, caractérisé par le fait que les nervures (7) s'engagent dans la région supérieure des flancs.

3. Bandage pneumatique pour véhicules selon la revendication 1 ou 2, caractérisé par le fait que les nervures (7) s'étendent radialement ou approximativement dans le sens radial.

4. Bandage pneumatique pour véhicules selon la revendication 1 ou 2, caractérisé par le fait que l'étendue radiale des nervures (7) présente une courbure vers le sens périphérique.

5. Bandage pneumatique pour véhicules selon la revendication 4, caractérisé par le fait que l'étendue axiale des nervures (7) présente additionnellement une courbure vers le sens périphérique.

6. Bandage pneumatique pour véhicules selon l'une des revendications 1 à 5, caractérisé par le fait que le fond (9) des rainures comporte un évidement (14) qui jouxte par-dessous le bord de la ceinture (4).

7. Bandage pneumatique pour véhicules selon l'une des revendications 1 à 6, caractérisé par le fait que le fond (9) des rainures forme un gradin (12) sur le bord de la ceinture (4).

8. Bandage pneumatique pour véhicules selon l'une des revendications 1 à 7, caractérisé par le fait qu'une gorge (16) ménagée dans la surface de roulement est prévue, dans la zone de l'épaulement (6), au-dessus du bord (8) de la ceinture (4).

9. Bandage pneumatique pour véhicules selon l'une des revendications 1 à 8, caractérisé par le fait que, observée dans le sens radial, la longueur (L) des nervures (7) représente de 0,1 à 0,5 fois la largeur (A) de la surface de roulement.

10. Bandage pneumatique pour véhicules selon l'une des revendications 1 à 9, caractérisé par le fait que la ceinture (4) déborde latéralement dans les zones des épaulements (6) dudit bandage, au-delà des bords de la partie (3) formant surface de roulement.

Fig. 1

Fig. 2

Fig.3

Fig. 4